# EUROPEAN PATENT APPLICATION

(11) **EP 4 768 605 A1**
(43) Date of publication of application: **01.07.2026**
(21) Application number: 25170326.0
(22) Date of filing: 14.04.2025
(51) Int. Cl.: C21B 7/06, F27B 1/14, F27D 1/16, F27D 1/00

(54) **METHOD OF LINING A BLAST FURNACE**

(30) Priority: 30.12.2024 US 202419004644
(71) Applicant: MAGNECO/METREL, INC., Deerfield, IL 60015 (US)
(72) Inventor: Meng, Wentao, Beijing, 100022 (CN); Pautler, Dominic, Tianjin, 300061 (CN)
(74) Representative: WSL Patentanwälte Partnerschaft mbB

(57) **Abstract**

A blast furnace lining has an upper stack portion, an intermediate bosh portion, and a hearth portion, and can have a bottom pad portion. At least part of the hearth portion has an outer layer of a first refractory material having a thermal conductivity of at least about 16 W/m-k and an inner layer of a second refractory material having an iron erosion index of less than 1% and a thermal conductivity of at least about 8 W/m-K. Also provided are a blast furnace lined with the blast furnace lining, and a method for lining a blast furnace.

## Description

### FIELD OF THE INVENTION

This invention is directed to a refractory lining for blast furnaces having improved thermal conductivity and shelf life, a blast furnace that included the lining, and a method of lining a blast furnace.

### BACKGROUND OF THE INVENTION

Linings for blast furnaces, especially the hearth portions of blast furnaces, are composed of refractory materials that operate in continuous contact with hot gases, liquid slag, and hot metal, often at temperatures exceeding 1550° C for 24 hours each day. The blast furnace hearth is a thick-walled structure that is conventionally formed of carbon-type refractory bricks. Carbon and graphite are known construction materials for the refractory bricks because they are not wet by hot metal.

To keep the refractory hearth from breaking out, the refractory bricks can be lined with a protective layer such as an alumina-based refractory material. One type of traditional lining includes staves and/or bricks formed of carbon or carbon-ceramic materials. These linings have numerous joints between the staves and/or bricks of the lining, and between the lining and the adjacent blast furnace hearth. These joints can deteriorate relatively quickly during use of the blast furnace, allowing alkali vapor, carbon monoxide, and other reactive materials to leak between the joints and chemically attack the refractory bricks that form the hearth. Although the joints can be secured with various protective grouts, linings formed of staves and/or bricks have a limited use life.

In order to alleviate the leakage problems associated with stave/brick linings, jointless linings have been developed using castable refractory materials. The castable refractory materials can be pumped or otherwise cast into a temporary mold that defines a space adjacent to the blast furnace hearth. The mold remains in place at least until the jointless refractory lining sets and hardens. The mold can then be disassembled and removed or can remain in place until it is burned off and consumed by the hot metal that is processed in the blast furnace. Yet even the jointless refractory linings require periodic repair and/or replacement due to their continuous contact with the hot gases, liquid slag, and hot metal (for example, molten iron) inside the blast furnace.

The blast furnace is a key component of any integrated steel plant. The blast furnace can be used to reduce iron ore to iron. For example, the charge to the blast furnace can include iron ore, metallurgical coke, and limestone, in the form of lumps and in different ratios fed from the top. Heated air can be supplied from the tuyeres of the blast furnace. The hot air blast contacts the descending charge in the furnace, causing chemical reactions with the metallurgical coke that reduce the iron ore to iron. The molten iron and slag are collected in the furnace hearth and are tapped separately from different tapholes.

Today's blast furnaces are designed for use lives ranging from about 5 to about 15 years depending on their size, construction, and specific use conditions. To achieve the maximum blast furnace life, the blast furnace refractory lining should be designed to provide resistance to high temperature corrosion, expansion relief, avoidance of cracking, and alkali resistance. The blast furnace hearth can be especially subject to corrosion by contact with molten iron, slag, and alkali, and typically requires refractory linings that are most resistant to corrosion and heat stress. Yet even the most durable refractory linings can require frequent replacement under high stress conditions.

### SUMMARY OF THE INVENTION

The present invention is directed to a blast furnace lining, a blast furnace having an inner wall lined with the blast furnace lining, and a method of lining a blast furnace. The blast furnace lining has an upper stack portion, an intermediate bosh (belly) portion, and a lower hearth portion, and can have a floor portion. The "upper stack portion" is defined herein as that portion of the lining that covers the stack of the blast furnace, which can approximately constitute the upper one-third to upper one-half of the vertical height of a blast furnace interior wall, measured from the lowest portion of the dome to the bottom of the hearth. This is the coolest portion of the blast furnace, with exemplary temperatures ranging from below 200° C to about 800° C.

The "intermediate bosh (belly) portion" is defined herein as that portion of the lining that covers the bosh or "belly" of the blast furnace, located below the stack, which can approximately constitute about one-quarter to one-third of the vertical height of a blast furnace interior wall. The blast furnace bosh (belly) is typically the hottest portion of the blast furnace. Temperatures in the bosh (belly) can, for example, range from about 800° C to above 2000° C. **In** both the stack and bosh portions of the blast furnace, temperatures rise as the charge descends through the blast furnace and the reduction of iron ore to iron progresses.

The "lower hearth portion" or "hearth portion" is defined herein as that portion of the lining that covers the hearth of the blast furnace, which is the lowest portion of the blast furnace located below the bosh. The hearth can approximately constitute about one-fifth to one-third of the vertical height of the blast furnace and can include the tuyeres and everything below the tuyeres. Exemplary temperatures in the hearth can range from above 2000° C to about 1500° C and can reflect some cooling from the tuyeres to the floor.

The "bottom pad portion" of the blast furnace lining can include any (typically horizontal) portion of the lining that covers the bottom pad (floor) of the hearth.

The hearth portion of the blast furnace lining can be designed to have sufficient thermal conductivity to cause rapid cooling of a boundary portion of the hot molten metal within the blast furnace, resulting in the formation of a solid boundary layer or "skull" of the molten metal adjacent to the blast furnace lining in the hearth. Once formed, the solid boundary layer can protect the blast furnace lining from ongoing exposure to hot gases, liquid slag, and hot molten metal within the blast furnace, thereby prolonging the useful life of the bast furnace lining and the blast furnace by substantial amounts. The solid metal boundary later can form in the hearth portion of the blast furnace and can cover the lower hearth portion of the lining, extending from the tuyeres to and including the floor. The solid boundary layer can protect the affected portions of the lining from erosion that would otherwise result from prolonged direct contact with the molten iron and slag.

In order to accomplish this objective, at least part of the hearth portion of the blast furnace lining can include an outer layer (safety lining) of a first refractory material having a thermal conductivity of at least about 16 W/m-K (measured over a range of 20° C to 250° C), and an inner layer (working lining) of a second refractory material having an iron erosion index of less than about 1% and a thermal conductivity of at least about 8 W/m-K (measured over a range of 20° C to 250° C). The outer layer (safety lining) can be located adjacent to the blast furnace stave (cooling system) and helps conduct cooling supplied by cooling water pipes located within the blast furnace stave, through the inner layer (working lining) and to the adjacent molten metal in the hearth. The blast furnace stave is a cooling facility located adjacent to the blast furnace shell, between the blast furnace shell and the lining. In order to prolong the life of the blast furnace lining and, hence, the blast furnace, the second refractory material in the inner layer of the lining should have at least a modest thermal conductivity in addition to the low iron erosion index.

In one embodiment, the bottom pad (floor) portion of the blast furnace lining can also have an outer (lower pad) layer (safety lining) formed using the first refractory material or an equivalent refractory material that has a thermal conductivity of at least about 16 W/m-K (measured over a range of 20° C to 250° C), and an inner (upper pad) layer (working lining) that includes the second refractory material or an equivalent refractory material that has an iron erosion index of less than about 1% and a thermal conductivity of at least about 8 W/m-K (measured over a range of 20° C to 250° C). As used herein, the term "layer" can be construed as a single layer, or a plurality of adjacent layers formed using the same refractory material.

The thermal conductivities of the refractory materials can be measured using ASTM E1461-13 or Chinese National Standard 2-GBT 22588-2008, which is modeled after ASTM E1461-13, both of which are incorporated by reference. When reporting thermal conductivity, "W" refers to watts, "m" refers to one meter of thickness, and "K" refers to one degree Kelvin. Because thermal conductivities vary with temperature, the values stated herein are intended to cover the range of temperatures between 20° C to 250° C. In some embodiments, the thermal conductivity of the first refractory material can be at least about 16 W/m-K, or at least about 20 W/m-K, or least about 24 W/m-K, or least about 28 W/m-K, or least about 32 W/m-K. While there is no theoretical upper limit, in practice, the thermal conductivity of the first refractory material can be up to about 60 W/m-K. In some embodiments, the second refractory material can have a thermal conductivity of at least about 8 W/m-K, or at least about 9 W/m-K, or at least about 10 W/m-K, or at least about 11 W/m-K, or at least about 12 W/m-K, or at least about 13 W/m-K, and up to about 15 W/m-K.

The iron erosion resistance is a measure of durability of the refractory lining and represents a percent erosion over a stated period of time under test conditions. The iron erosion resistance can be measured using Standard Test Procedure GB/T 24201-2009 of the National Standards of the People's Republic of China, published on July 8, 2009, the procedure of which is incorporated by reference and is summarized in the Examples herein. In some embodiments, the second refractory material can have an iron erosion index of less than about 1.0%, or less than about 0.8%, or less than about 0.6%, or less than about 0.4%, or less than about 0.3%.

The inner layer (working lining) formed of the second refractory material typically protects the outer layer (safety lining) formed of the first refractory material from iron erosion. In some embodiments, the first refractory material can also have excellent iron erosion properties. For example, in some embodiments, the first refractory material can also have an iron erosion index of less than about 1.0%, or less than about 0.8%, or less than about 0.6%, or less than about 0.4%, or less than about 0.3%.

The chemical reduction of iron ore to iron, and the consequent generation of heat, occurs in the bosh (belly) and hearth portions of the blast furnace. Forming the lower hearth portion of the blast furnace lining, and suitably the bottom pad (floor) portion to include the outer and inner refractory layers described herein provides for an optimal removal of heat from the blast furnace hearth and a consequent formation of the solid metal skull layer on the lower hearth portion of the blast furnace lining. The consequent formation of the solid metal skull combined with the low erosion index of the second refractory material in the blast furnace hearth prolongs the use lives of both the blast furnace lining and the blast furnace.

The blast furnace lining is suitably a jointless blast furnace lining. In other words, the blast furnace lining can be continuous and uninterrupted, and can be free of joints as would result using refractory bricks as the lining. The outer and inner layers of the lower hearth portion of the blast furnace lining can be formed using castable refractory materials and can be formed by pumping or casting the refractory material(s) into molds that are temporarily positioned at spaced distances from the blast furnace inner wall. The upper stack and intermediate bosh (belly) portions of the blast furnace lining can be formed using conventional techniques and conventional refractory materials as further described herein.

In one embodiment, the first refractory material used in the lower hearth portion of the lining can have a composition that includes the following ingredients in the following amounts:
about 85% to about 95% by weight silicon carbide;
about 3% to about 10% by weight silica;
about 0.5% to about 3% by weight alumina;
about 0.5% to about 3% by weight free carbon; and
about 0.1% to about 1% combined weight of iron oxide, calcium oxide, and titanium oxide.

In one embodiment, the second refractory material used in the lower hearth portion of the lining can have a composition that includes the following ingredients in the following amounts:
about 55% to about 90% by weight alumina;
about 10% to about 25% by weight silicon carbide;
about 1% to about 15% by weight silica;
about 0.5% to about 3% by weight titanium oxide;
about 0.5% to about 2% by weight free carbon; and
about 0.1% to about 1% combined weight of iron oxide and calcium oxide.

With the foregoing in mind, it is a feature and advantage of the invention to provide a blast furnace lining including the following elements:
an upper stack portion, an intermediate bosh portion, and a lower hearth portion;
wherein at least part of the lower hearth portion of the lining includes an outer layer of a first refractory material having a thermal conductivity of at least about 16 W/m-K and an inner layer of a second refractory material having an iron erosion index of less than about 1% and a thermal conductivity of at least about 8 W/m-K.

It is also a feature and advantage of the invention to provide a blast furnace having a blast furnace lining, the blast furnace lining including the following elements:
an upper stack portion, an intermediate bosh portion, a lower hearth portion, and a bottom pad portion;
wherein at least part of the lower hearth portion of the lining includes an outer layer of a first refractory material having a thermal conductivity of at least about 16 W/m-K and an inner layer of a second refractory material having an iron erosion index of less than about 1% and a thermal conductivity of at least about 8 W/m-K; and
the first refractory material includes:
   about 85% to about 95% by weight silicon carbide;
   about 3% to about 10% by weight silica; and
   about 0.5% to about 3% by weight alumina.

It is also a feature and advantage of the invention to provide a blast furnace having a blast furnace lining, the blast furnace lining including the following elements:
an upper stack portion, an intermediate bosh portion, a lower hearth portion, and a bottom pad portion;
wherein at least part of the lower hearth portion of the lining includes an outer layer of a first refractory material having a thermal conductivity of at least about 16 W/m-K and an inner layer of a second refractory material having an iron erosion index of less than about 1% and a thermal conductivity of at least about 8 W/m-K; and
at least part of the bottom pad portion of the lining includes an outer layer of the first refractory material having a thermal conductivity of at least about 16 W/m-K and an inner layer of the second refractory material having an iron erosion index of less than about 1% and a thermal conductivity of at least about 8 W/m-K.

It is also a feature and advantage of the invention to provide a method for lining a blast furnace, which includes the following steps:
applying a blast furnace lining having an upper stack portion, an intermediate bosh portion, and a lower hearth portion to an interior surface of the blast furnace;
wherein at least part of the lower hearth portion of the lining includes an outer layer of a first refractory material having a thermal conductivity of at least about 16 W/m-K and an inner layer of a second refractory material having an iron erosion index of less than about 1% and a thermal conductivity of at least about 8 W/m-K.

It is also a feature and advantage of the invention to provide a method for lining a blast furnace, which includes the following steps:
applying a blast furnace lining having an upper stack portion, an intermediate bosh portion, and a lower hearth portion to an interior surface of the blast furnace;
wherein at least part of the lower hearth portion of the lining includes an outer layer of a first refractory material having a thermal conductivity of at least about 20 W/m-K and an inner layer of a second refractory material having an iron erosion index of less than about 1% and a thermal conductivity of at least about 8 W/m-K; and
the first refractory material includes:
   about 85% to about 95% by weight silicon carbide;
   about 3% to about 10% by weight silica; and
   about 0.5% to about 3% by weight alumina.

It is also a feature and advantage of the invention to provide a method for lining a blast furnace, which includes the following steps:
applying a blast furnace lining having an upper stack portion, an intermediate bosh portion, a lower hearth portion, and a bottom pad portion to an interior surface of the blast furnace;
wherein at least part of the lower hearth portion of the lining comprises an outer layer of a first refractory material having a thermal conductivity of at least about 16 W/m-K and an inner layer of a second refractory material having an iron erosion index of less than about 1% and a thermal conductivity of at least about 8 W/m-K; and
at least part of the bottom pad portion of the lining includes a lower pad layer of the first refractory material having a thermal conductivity of at least about 16 W/m-K and an upper pad layer of the second refractory material having an iron erosion index of less than about 1% and a thermal conductivity of at least about 8 W/m-K.

The foregoing and other features and advantages of the invention will become apparent from the following Detailed Description of the Invention, read in conjunction with the accompanying drawings.

### BRIEF DESCRIPTION OF THE DRAWINGS

Fig. 1 schematically illustrates one embodiment of a blast furnace that is lined with a blast furnace lining of the invention.
Fig. 2 is an enlarged view of the hearth portion of the blast furnace shown in Fig. 1, emphasizing the features of the lower hearth portion of the blast furnace lining.
Fig. 3 schematically illustrates a test apparatus for measuring percent iron erosion, using the procedure summarized in the Examples.
Fig. 4 is a sectional view of a refractory specimen used for measuring iron erosion.

### DETAILED DESCRIPTION OF THE INVENTION

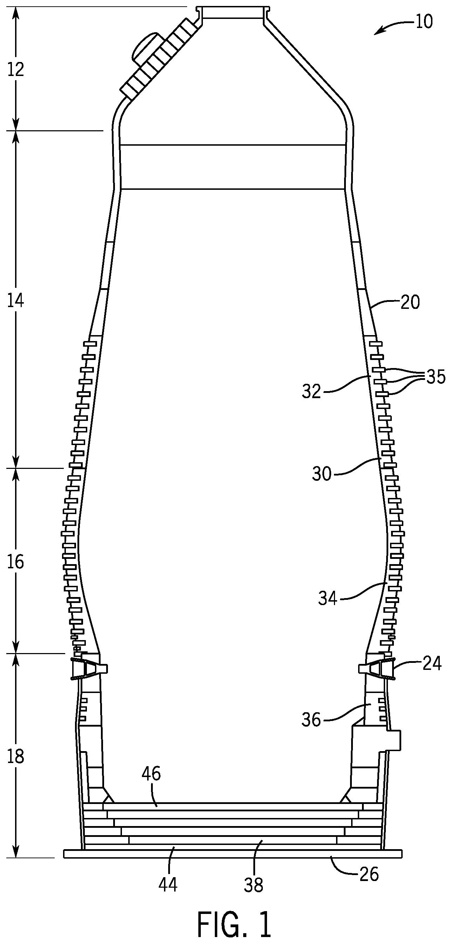

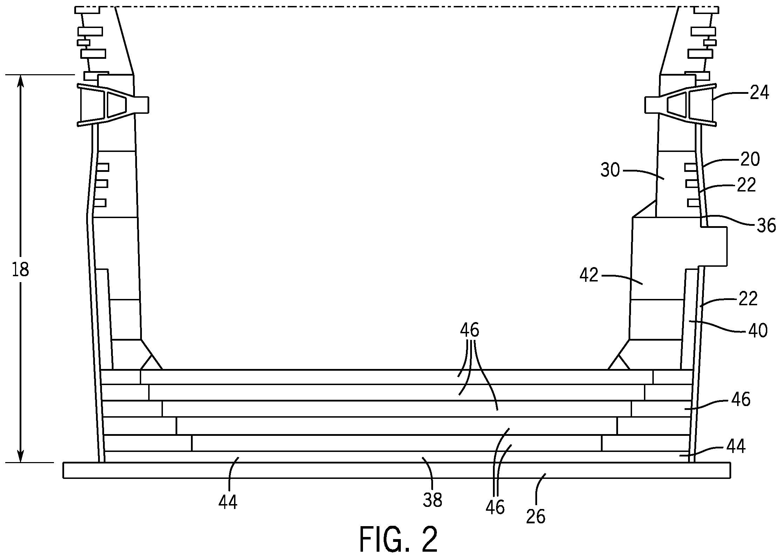

Fig. 1 schematically illustrates one embodiment of a blast furnace 10 equipped with a blast furnace lining 30 of the invention, portions of which can be reinforced using cooling plates 35. Fig. 2 is an enlarged view of the lower hearth portion of the same blast furnace 10. The blast furnace 10 includes a dome 12, a stack 14, a bosh (belly) 16, and a hearth 18.

An exemplary charge to the blast furnace 10 can include iron ore, metallurgical coke, and limestone, in the form of lumps and in different ratios fed into the dome 12. Heated air, which can be enriched with oxygen, can be supplied to the blast furnace through the tuyeres 24 and can have a temperature exceeding 2000° C. The rising hot air contacts the descending charge in the furnace, causing a steady rise in temperature as the charge descends, resulting in a chemical reaction with the metallurgical coke that reduces the iron ore to iron. The reduction of iron ore to iron can proceed in a series of reactions from Fe₂O₃ to Fe₃O₄, then to FeO, then to Fe (solid), then to Fe (liquid) as the charge descends through the blast furnace 10. For example, the temperature in the stack 14 may range from about 160-180° C near the dome 12 to about 1500° C or more approaching the bosh 16, causing fluidization of the charge materials. Much of the chemical reduction from iron ore to iron occurs in the bosh (belly) 16 at temperatures ranging from about 1500° C to above 2000° C. The completely molten iron and slag descend into the hearth 18, where they can be collected using tap holes. As the reduced iron descends from the bosh (belly) 16 through the hearth 18, the temperature can remain very high or can cool to about 1500° C to 1550° C in the lower portion of the hearth 18 closer to the bottom pad (floor) 26. The cooling in the hearth 18 can be assisted by a conventional stave system 22 in the hearth 18 adjacent to the blast furnace shell 20 (Fig. 2), located between the shell 20 and the blast furnace lining 30, which can include a network of cooling water pipes designed to carry heat away from the hearth 18. The blast furnace lining 30 includes an upper stack portion 32 that covers portions of the inner blast furnace wall 20 corresponding to the stack 14 of the blast furnace. The upper stack portion 32 can be formed using a dense, high alumina content refractory material, for example, one that contains 60% or higher by weight alumina. The high alumina refractory material can be applied and formed in the stack 14 using shotcreting or another conventional technique and can be formed after formation of the intermediate and lower portions 34 and 36 of the blast furnace lining 30 as further described below. Because the upper stack portion 32 of the lining 30 aligns with the lowest temperature portion of the blast furnace, it is typically subject to less stress-induced wear than the intermediate and lower portions 34 and 36 of the blast furnace lining 30.

The blast furnace lining 30 includes an intermediate bosh (belly) portion 34 that covers portions of the inner blast furnace wall 20 in the bosh 16 the blast furnace 10, which is sometimes called the "belly" portion of the blast furnace 10. In one embodiment, the intermediate bosh (belly) portion 34 of the blast furnace lining 30 can be formed using a high alumina-content refractory material that also includes silicon carbide for heat conductance. In one embodiment, this refractory material can include:
about 55% to about 90% by weight alumina;
about 10% to about 25% by weight silicon carbide;
about 1% to about 15% by weight silica; and
about 0.5% to about 4% by weight titania.

The blast furnace lining 30 includes a hearth portion 36 that covers the portions of the inner blast furnace wall 20 in the blast furnace hearth 18. The blast furnace lining 30 can also include a bottom pad (floor) portion 38 that covers the floor 26 of the hearth 18. The lower hearth portion 36 and bottom pad (floor) portion 38 are typically the thickest portions of the blast furnace lining 30 because they exist in the region of the blast furnace (the hearth region) that is most susceptible to wear and erosion due to constant exposure to high-temperature molten iron. As explained above, the blast furnace hearth 18 is equipped with a stave cooling system 22 that removes heat from the blast furnace hearth using cooling pipes equipped with a running cooling fluid such as water. As shown in Fig. 2, the stave cooling system 22 relies on the thermal conductivity of the lower hearth portion of the lining 30 to remove heat from the molten metal inside the blast furnace hearth 18. The hearth 18 is equipped with a similar cooling system in or adjacent to the floor 26 that is not visible in Fig. 2 and performs a similar function of removing heat from the hot molten iron that is adjacent to the floor portion 38 of the blast furnace lining 30.

In accordance with the invention, the performance of the blast furnace lining 30 is improved by forming at least part of the hearth portion 36 with an outer layer (safety lining) 40 including a first refractory material and an inner layer (working lining) 42 including a second refractory material. The outer layer (safety lining) 40 is placed adjacent to the stave cooling system 22 and is designed to have an exceptionally high thermal conductivity. To this end, the first refractory material used to form the outer layer (safety lining) 40 has a thermal conductivity of at least about 16 W/m-K. In some embodiments, the first refractory material can have a thermal conductivity of at least about 20 W/m-K, or at least about 24 W/m-K, or at least about 28 W/m-K, or at least about 32 W/m-K. From a performance standpoint, there is no theoretical upper limit to the thermal conductivity of the first refractory material. For example, the first refractory material can have a thermal conductivity of up to about 60 W/m-K, or up to about 56 W/m-K, or up to about 52 W/m-K.

The highly thermally conductive outer layer (safety lining) 40 improves the transfer of heat between the hot molten metal in the hearth 18 and the stave cooling system 22. In order to perform this function effectively, the inner layer (working lining) 42 also has a modest thermal conductivity, in addition to having a low iron erosion index which indicates minimal erosion during prolonged exposure to molten iron. To this end, the second refractory material used to form the inner layer (working lining) 42 can have a thermal conductivity of at least about 8 W/m-K, or at least about 9 W/m-K, or at least about 10 W/m-K, or at least about 11 W/m-K, or at least about 12 W/m-K, or at least about 13 W/m-k, and/or up to about 15 W/m-K, or up to about 14.5 W/m-K, or up to about 14 W/m-k, or up to 13.5 W/m-K. Moreover, the inner layer (working lining) 42 has the greatest exposure to molten metal and should have a high resistance to erosion in order to protect the integrity of the hearth portion 36 of the blast furnace lining 30. To this end, the second refractory material can have an iron erosion index of less than about 1%, or less than about 0.8%, or less than about 0.6%, or less than about 0.4%, or less than about 0.3%.

The combination of higher overall thermal conductivity provided by the outer layer (safety lining) 40, and the modest thermal conductivity and low iron erosion index provided by the inner layer (working lining) 42, can greatly increase the use life of the blast furnace lining 30 and the overall blast furnace 10. This combination of properties distinguishes the blast furnace lining 30 from conventional blast furnace lining materials used in the hearth 18, some of which provide either a high thermal conductivity or a low iron erosion index, but not both. In one embodiment, the first refractory material can also have an iron erosion index of less than about 1%, or less than about 0.8%, or less than about 0.6%, or less than about 0.4%, or less than about 0.3%.

Table 1 shows the thermal conductivities and iron erosion indices of two exemplary embodiment of a conductive refractory composition of the invention, labeled EXSR-1B (useful as the first refractory material) and TMS-1 (useful as the second refractory material), whose compositions are detailed in the Examples below. These properties are compared to six prior art refractory lining materials that were typically used either as single layers or multiple layers of the same material, but not as linings having outer and inner layers of different refractory materials as described herein. In one embodiment of the invention, the EXSR-1B can be used to form the outer layer (safety lining) 40 and the TMS-1 can be used to form the inner layer (working lining) 42 in the hearth region 36 of the refractory lining 30. In another embodiment, the EXSR-1B can be used to form the outer layer (safety lining) 40 and the Metpump^{®} 10 can be used to form the inner layer (working lining) 42.

**Table 1**

| Test Item | Thermal Conductivity W/m-K (20° C to 250° C)* | Iron Erosion Index % ** |
|---|---|---|
| EXSR-1B (inventive)*** | 33-39 | 0.4 |
| TMS-1*** | 9-13 | 0.8 |
| Metpump^{®} 10*** | 8-14 | 0.2 |
| Ceramic Bricks | 2-5 | 0.2 |
| UCAR NMA (hot pressed carbon brick) | 15-18 | 28-29 |
| Microporous Carbon Blocks (imported) | 17-20 | 28-30 |
| Microporous Carbon Blocks (domestic) | 9-14 | 30 |
| Al₂O₃ + **Carbon** Bricks | 12-14 | 1.2-2.0 |

| | | |
|---|---|---|
| * Tested according to Chinese National Standard 2-GBT 22588-2008 ** Tested according to Chinese Standard Test Procedure GB/T 24201-2009 *** Samples were tested after being buried in carbon and fired at 1400° C for 3 hours | | |

**In** one embodiment, the bottom pad (floor) portion 38 of the refractory lining 30 can also include a dual-material layer structure similar to the hearth portion 36 of the lining. As shown in Fig. 2, at least part, and suitably all of the bottom pad (floor) portion 38 of the lining 30 can include an outer (lower pad) layer 44 including the first refractory material or another refractory material meeting the same standard of high thermal conductivity, and an inner (upper pad) layer 46 including the second refractory material or another refractory material meeting the same standards of modest thermal conductivity and low erosion index. As explained above, the term "layer" is defined as including ether a single layer of a given refractory material, or multiple adjacent layers of the same refractory material. Thus, the term "inner" or "upper pad" layer includes the multiple (five) layers of the second refractory material shown in Figs. 1 and 2.

As with the lower hearth portion 36, the highly thermally conductive lower pad layer 44 in the floor portion 38 improves the transfer of heat between the hot molten metal in the hearth 18 and a lower cooling pipe system (not shown) that is located in or adjacent to the blast furnace floor pad 26, which can be formed of an insulating castable ASX60JS heat resistant concrete pad. To this end, the first refractory material or equivalent used to form the lower pad layer (safety lining) 44 has a thermal conductivity of at least about 16 W/m-K, suitably at least about 20 W/m-K, or at least about 24 W/m-K, or at least about 28 W/m-K, or at least about 32 W/m-K, and/or up to about 60 W/m-K, or up to about 56 W/m-K, or up to about 52 W/m-K. In order to perform the heat transfer function effectively, the upper pad layer (working lining) 46 also has a modest thermal conductivity, in addition to having a low iron erosion index which indicates minimal erosion during prolonged exposure to molten iron. To this end, the second refractory material or equivalent used to form the upper pad layer (working lining) 46 can have a thermal conductivity of at least about 8 W/m-K, or at least about 9 W/m-K, or at least about 10 W/m-K, or at least about 11 W/m-K, or at least about 12 W/m-K, or at least about 13 W/m-k, and/or up to about 15 W/m-K, or up to about 14.5 W/m-K, or up to about 14 W/m-k, or up to about 13.5 W/m-K. Moreover, the second refractory material or equivalent used to form the upper pad layer (working lining) 46 can have an iron erosion index of less than about 1%, or less than about 0.8%, or less than about 0.6%, or less than about 0.4%, or less than about 0.3%. As explained above, the first refractory material used to form the lower pad layer (safety lining) 44 can also have an iron erosion index of less than about 1%, or less than about 0.8%, or less than about 0.6%, or less than about 0.4%, or less than about 0.3%.

The increased heat transfer resulting from the inventive dual layer refractory structure in the hearth portion 36 and/or bottom pad (floor) portion 38 of the blast furnace lining 30 facilitates the formation of a protective solid metal boundary layer referred to as a "skull" in the hearth 18 adjacent to the hearth portion 36 and/or bottom pad (floor) portion 38 of the blast furnace lining 30. The skull is a relatively thin layer of solid iron and/or slag that forms adjacent to the lining 30 due to the higher rate of heat removal in the affected portions. The skull provides the blast furnace lining 30 with additional protection from erosion in the affected portions, thereby further prolonging the useful life of the blast furnace lining 30 and blast furnace 10.

The area covered by the protective skull is affected in part by the area encompassed by the highly conductive first refractory material, and in part by the thermal conductivity of the first and second refractory materials. Under suitable conditions and with suitable design of the outer and inner refractory layers 40 and 42, and the lower and upper pad layers 44 and 46, the skull can cover most or all of the regions in the hearth 18 where the blast furnace lining is constantly exposed to molten metal and can cover most or all of the hearth portion 36 and floor portion 38 of the blast furnace lining 30.

The wide variations in temperature and extreme heat in parts of the blast furnace 10 have spearheaded the use of different alumina-containing refractory compositions in different parts of the refractory lining. For example, it is known to use refractory lining materials having alumina contents of about 60% by weight or less in the stack 14 of the blast furnace, progressing to refractory lining materials having higher alumina contents of over 70% by weight in the bosh 16 and hearth 18 portions of the blast furnace. The use of refractory materials having varying compositions is intended to create more uniform wear and tear in the various parts of the lining that are exposed to lower and higher temperatures.

The present invention runs contrary to conventional wisdom by replacing some of the high alumina-containing refractory lining in the hearth 18 of the blast furnace with a highly thermally conductive refractory material that can have a low alumina content and can instead be based primarily silicon carbide. By combining an outer layer (safety lining) 40 or 44 of highly thermally conductive first refractory material with an inner layer (working lining) 42 or 46 of a second refractory material having modest thermal conductivity and a low iron erosion index, the invention achieves the benefits of both types of refractory material combined in the hearth portion 36 and bottom pad (floor) portion 38 of the blast furnace lining 30. In accordance with the invention, at least part of the hearth portion 36 and/or at least part of the floor portion 38 of the blast furnace lining 30 can include the hybrid refractory layer structure. In other embodiments, the hybrid refractory layer structure can constitute all of the hearth portion 36 and/or all of the bottom pad (floor) portion 38 of the blast furnace lining 30.

**In** one embodiment, the first conductive refractory material can be primarily based on silicon carbide. For example, the conductive refractory material can include at least about 80% by weight silicon carbide, or at least about 85% by weight silicon carbide, or at least about 88% by weight silicon carbide, and/or up to about 98% by weight silicon carbide, or up to about 95% by weight silicon carbide, or up to about 92% by weight silicon carbide.

**In** one embodiment, the first conductive refractory material can have a low alumina content. For example, the first refractory material can include up to about 10% by weight alumina, or up to about 5% by weight alumina, or up to about 3% by weight alumina, and/or at least about 0.5% by weight alumina, or at least about 1.0% by weight alumina, or at least about 1.5% by weight alumina.

In one embodiment, the first refractory material can have a low silica content. For example, the first refractory material can include up to about 15% by weight silica, or up to about 10% by weight silica, or up to about 8% by weight silica, and/or at least about 1% by weight silica, or at least about 3% by weight silica, or at least about 5% by weight silica.

In one embodiment, the first conductive refractory material can include a minor amount of free carbon. For example, the first refractory material can include at least about 0.5% by weight free carbon, or at least about 1.0% by weight free carbon, or at least about 1.5% by weight free carbon, and/or up to about 3% by weight free carbon, or up to about 2.5 % by weight free carbon or up to about 2% by weight free carbon.

In one embodiment, the first highly thermally conductive refractory material can include:
about 80% to about 98% by weight silicon carbide;
about 1% to about 15% by weight silica; and
about 0.5% to about 10% by weight alumina.

In one embodiment, the first highly thermally conductive refractory composition can include:
about 85% to about 95% by weight silicon carbide;
about 3% to about 10% by weight silica; and
about 1% to about 3% by weight alumina.

In one embodiment, the second refractory material having modest thermal conductivity and low iron erosion index can include about 55% to about 90% by weight alumina. In one embodiment, the second refractory material can include:
about 55% to about 90% by weight alumina;
about 10% to about 25% by weight silicon carbide;
about 1% to about 15% by weight silica; and
optionally, 0.5% to about 3% by weight titanium dioxide.

In one embodiment, the hearth portion 36 of the blast furnace lining 30 can be formed entirely using the outer layer 40 of first refractory material and the inner layer 42 of second refractory material. In another embodiment, only part of the hearth portion 36 can include the outer layer 40 of first refractory material and the inner layer 42 of second refractory material, and the remainder of the lower hearth portion 36 can be formed using a single layer the second refractory material. For example, the hybrid layer structure including the outer layer 40 of first refractory material and the inner layer 42 of second refractory material can encompass about 25% to about 75%, or about 30% to about 60%, or about 35% to about 50% of a vertical length of the lower hearth portion 36 of the blast furnace lining 30, and generally covers a region corresponding to the molten iron bath level in the hearth.

Overall, the thickest portions of the blast furnace lining 30 can be present in the hearth portion 36 and the bottom pad (floor) portion 38 due to the continuous exposure to high-temperature molten metal in the hearth 18. For example, the lower hearth portion 36 of the blast furnace lining 30 can have an overall thickness of about 800 mm to about 2 meters, or about 1 meter to about 1.5 meter. Where the outer layer 40 of the first refractory material and the inner layer 42 of the second refractory material are both present, the outer layer 42 can have a thickness of about 150 mm to about 400 mm, or about 200 mm to about 300 mm.

The bottom pad (floor) portion 38 of blast furnace lining 30 can have an overall thickness of about 1.5 meter to about 3 meters, or about 2 meters to about 2.5 meters. Where the lower pad layer 44 of first refractory material and the upper pad layer 46 of second refractory material are both present, the lower pad layer 44 can have a thickness of about 100 mm to about 300 mm, or about 150 mm to about 250 mm.

The upper stack portion 32 and the intermediate bosh (belly) portion 34 of the blast furnace lining 30 can be formed of conventional alumina-based refractory materials and can be formed using a single refractory layer that is thinner than the lower hearth portion 36 of the blast furnace lining 30. These portions of the blast furnace lining can be formed using shotcreting or another conventional technique. On one embodiment, the bosh (belly) portion 34 of blast furnace lining 30 can be formed using an alumina-based refractory material that is similar to the second refractory material used in outer layer 42, except for slight composition changes for improved thermal conductance, erosion resistance and application by shotcreting:
about 55% to about 90% by weight alumina;
about 15% to about 30% by weight silicon carbide;
about 1% to about 10% by weight fumed silica; and
about 0.5% to about 4% by weight pellet pitch.

In one embodiment, the stack portion 32 of blast furnace lining 30 can be formed using an alumina-based refractory composition that is also designed for shotcreting, but without the significant silicon carbide content:
about 80% to about 95% by weight alumna-silica (60% alumina);
about 5% to about 15% by weight calcined alumina; and
about 1% to about 10% by weight fumed silica.

The bosh (belly) and stack portions 34 and 32 of blast furnace lining 30 can have thicknesses ranging from about 100 mm to about 700 mm, or about 200 mm to about 550 mm, with the lower thicknesses occurring near the top of stack portion 32.

The invention is also directed to a blast furnace 10 having an inner surface, such as an inner wall 20, that is at least partially lined with a blast furnace lining 30 according to the invention. The blast furnace lining can be any embodiment of the blast furnace lining 30 described above. For example, the blast furnace lining can be any of the above-described blast furnace linings that includes:
an upper stack portion, an intermediate bosh portion, and a lower hearth portion;
wherein at least part of the lower hearth portion of the lining includes an outer layer of a first refractory material having a thermal conductivity of at least about 16 W/m-K and an inner layer of a second refractory material having an iron erosion index of less than about 1% and a thermal conductivity of at least about 8 W/m-K.

The invention is also directed to a method for lining a blast furnace, which includes the following steps:
applying a blast furnace lining having an upper stack portion, an intermediate bosh (belly) portion, and a lower hearth portion to an interior surface of the blast furnace;
wherein at least part of the lower hearth portion of the lining includes an outer layer (safety lining) of a first refractory material having a thermal conductivity of at least about 16 W/m-K and an inner layer (working lining) of a second refractory material having an iron erosion index of less than about 1% and a thermal conductivity of at least about 8 W/m-K.

Again, in the method of the invention, the blast furnace lining can be any embodiment of the blast furnace lining 30 described above. For example, the blast furnace lining can be any of the above-described blast furnace linings that includes:
an upper stack portion, an intermediate bosh portion, and a lower hearth portion;
wherein at least part of the lower hearth portion of the lining includes an outer layer (safety lining) of a first refractory material having a thermal conductivity of at least about 16 W/m-K and an inner layer (working lining) of a second refractory material having an iron erosion index of less than about 1% and a thermal conductivity of at least about 8 W/m-K.

### EXAMPLES

Referring to Figs. 1 and 2, in the illustrated blast furnace 10, the upper stack portion 32 of the blast furnace lining 30 was formed by shotcreting using an alumina-based refractory material sold as Metpump^{®} SX SC by Magneco/Metrel, Inc., containing about 87% by weight of a mullite/kyanite aluminosilicate mixture (60% alumina, 40% silica), about 10% by weight calcined alumina, about 2.5% by weight fumed silica, and a balance of cryolite, magnesium oxide, and processing aids. The intermediate bosh (belly) portion 34 of the blast furnace lining 30 was formed by shotcreting using a high temperature-resistant alumina-based refractory composition sold as Metpump^{®} 10 SC by Magneco/Metrel, Inc., containing about 76% by weight of a bauxite/alumina mixture, about 20% by weight silicon carbide, about 2.5% by weight fumed silica, and a balance of pellet pitch, magnesium oxide, and processing aids.

The hearth portion 36 included the hybrid (dual layer) refractory structure along a lower 40% of its vertical length, corresponding to a molten iron bath level, and a single layer of second refractory material along an upper 60% of its vertical length. The bottom pad (floor) portion 38 included the hybrid (dual layer) refractory structure along its entire horizontal length.

[The outer layer 40 in the lower hearth portion 36 of the blast furnace lining 30, and the lower pad layer 44 of the floor portion 38, can each be formed by pumping and molding a highly thermally conductive first refractory material having a thermal conductivity of 33-39 W/m-K and the following composition in percent by weight:
Silicon Carbide - 89.22
Silica - 6.35
Free Carbon - 1.85
Alumina - 1.60
Iron Oxide - 0.32
Calcium Oxide - 0.062
Titanium Dioxide - 0.036

The outer layer (safety lining) 40 of the hearth portion 36 had a thickness of about 150-200 mm. The lower pad layer (working lining) 44 of the floor portion 38 had a thickness of about 100-150 mm.

The balance of the hearth portion 36, including the inner layer (working lining) 42 and the part where only one layer is present, and the upper pad (working lining) 46 in the floor portion 38, can be formed by pumping and molding a highly erosion-resistant alumina-based refractory material sold as Metpump^{®} 10 by Magneco/Metrel, Inc., having an erosion index of about 0.2%, a thermal conductivity of about 11 W/m-K, and a composition that includes about 74% by weight alumina, 17% by weight silicon carbide, 6% by weight silica, 2% by weight titania, and a balance of processing aids.

The inner layer (working lining) 42 of the hearth portion 36, and the part where only one refractory layer was present, each had a thickness of about 800-1000 mm. The upper layer 44 of the bottom pad (floor) portion 38 had a thickness of about 2 meters.

In both embodiments of the blast lining 30, the highly thermally conductive outer layer 40 in the hearth portion 36 and the highly thermally conductive lower pad layer 44 in the bottom pad portion 38 conduct heat rapidly enough to cause formation of a solid metal boundary layer (skull) covering the hearth portion 36 and the bottom pad portion 38 to protect them from further direct exposure to molten iron and slag.

### Test Procedure for Measuring Iron Erosion Index (GB/T 24201-2009)

This standard test summarized below applies to the determination of the corrosion resistance of blast furnace refractories to pig iron at high temperature. The test sample (specified below) is first weighed, then immersed in molten iron at 1425° C and stirred for 40 minutes with a nitrogen blanket, then weighed again to determine the mass of the test sample that is eroded by the molten iron.

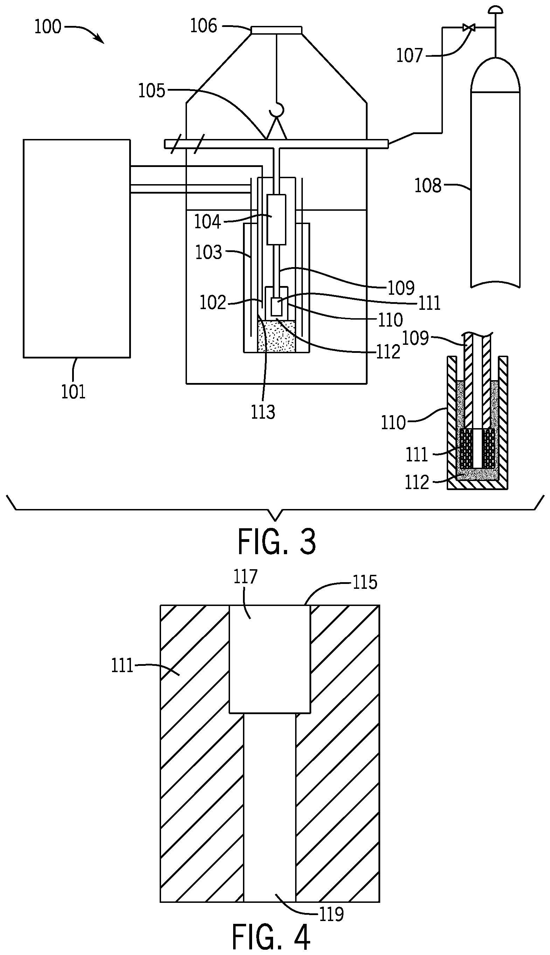

The test device 100 is schematically shown in Fig. 3, in which the reference numerals 100-113 refer to the following elements arranged as shown:
101-temperature controller
102-platinum-rhodium- platinum thermocouple
103-silicon-molybdenum rod
104-counterweight
105-ventilation hose
106-bracket
107- flow meter
108- nitrogen cylinder
109- corundum connecting pipe
110- corundum crucible
111- specimen
112- molten iron
113- corundum tube

Additional items needed are:
High temperature furnace, with working temperature not less than 1500°C.
Automatic constant temperature controller with a power of 15KW.
Electronic balance, maximum weight 800g, accuracy 0.05g.
Rotor flow meter: 0L/min~10 L/min
Vernier caliper: measuring range: 0mm~200mm, accuracy 0.03mm.
Blast drying oven: temperature range: 0C~300°C.
Bottled industrial nitrogen, purity 99.95%.

To prepare the specimens, take two cylindrical specimens of the refractory material having a diameter of 30 + 0.5 mm and a height of 40 + 0.5 mm. Drill an opening 115 in the center of each specimen to yield specimens 111 as shown in Figs. 3 and 4. As shown in Fig. 4, the opening 115 can include an upper portion 117 which can span an upper 15 mm of the opening 115 and can have a slightly wider diameter of 10 mm, and a lower portion 119 which can span a lower 25 mm of the opening 115 and can have a slightly narrower diameter of 8 mm. The slightly wider upper portion 117 can receive a lower end of the corundum connecting pipe 109, which can also have an inner diameter of about 8 mm and can be used as a vent in addition to securing the specimen 111 in place for testing. After weighing the specimen 111 to determine its initial mass, the specimen 111 can be firmly bonded to the corundum connecting pipe 109 (Fig. 3) using a carbonaceous mud mixed with phenolic resin and the bonded parts can be dried at 120° C in an electric stove.

As shown in Fig. 3, the connecting pipe 109 should be long enough to be hung from a bracket 106 in an upper portion of the high-temperature furnace. Weigh 1550 ± 20 grams of steel-making molten pig iron containing 3.0% - 4.0% carbon and heat the furnace 100 to 1425° C using a heating rate of not more than 10° C per minute, and a total heating time of about 4 hours. Gradually pour the pig iron into the corundum crucible 110 as it melts due to the heat. Maintain the temperature for at least 10 minutes before inserting the specimen.

Next, insert the specimen 111 into the corundum crucible 110 using the nitrogen for protection, so that the specimen 111 remains suspended 20 mm above the bottom of the crucible 110 and is immersed in the molten iron 112 as shown. Using a nitrogen flow rate of about 0.5 L/min. applied from the nitrogen cylinder 108 through the connecting pipe 109, keep the specimen 111 immersed in the 1425° C molten iron for 40 minutes. Remove the specimen 111 from the molten iron and cool it using water. After cooling, dry the specimen 111 and remove any iron beads remaining on its surface. Weigh the specimen 111 and compare its final mass to its initial mass to determine the loss due to iron erosion.

The test is repeated for each of the two specimens, and the results are averaged to determine the percent iron erosion for the refractory material. The percent iron erosion is reported to the nearest one decimal point.

The embodiments of the invention described herein are exemplary. Various modifications and improvements can be made without changing the spirit and scope of the invention. The scope of the invention is indicated by the appended claims, and all changes that fall within the meaning and scope of equivalents are intended to be embraced therein.

## Claims

1. A method for lining a blast furnace, comprising the steps of:
applying a blast furnace lining having an upper stack portion, an intermediate bosh portion, and a lower hearth portion to an interior surface of the blast furnace;
wherein at least part of the lower hearth portion of the lining includes an outer layer of a first refractory material having a thermal conductivity of at least 16 W/m-K and an inner layer of a second refractory material having an iron erosion index of less than 1% and a thermal conductivity of at least 8 W/m-K.

2. The method of claim 1, wherein the first refractory material has a thermal conductivity of at least 20 W/m-K, preferably at least 24 W/m-K, more preferably at least 28 W/m-K most preferably at least 32 W/m-K.

3. The method of claim 1 or 2, wherein the second refractory material has an iron erosion index less than 0.8%, preferably less than 0.6%, more preferably less than 0.4%.

4. The method of any of claims 1 to 3, wherein the first refractory material comprises:
80% to 98% by weight silicon carbide;
1% to 15% by weight silica; and
0.5% to 10% by weight alumina.

5. The method of claim 4, wherein the first refractory material comprises:
85% to 95% by weight silicon carbide;
3% to 10% by weight silica; and
1% to 3% by weight alumina.

6. The method of any of claims 1 to 5, wherein the second refractory material comprises:
55% to 90% by weight alumina;
10% to 25% by weight silicon carbide;
1% to 15% by weight silica; and
optionally, 0.5% to 5% by weight titanium dioxide.

7. The method of any of claims 1 to 6, wherein the outer layer is formed by pumping and molding the first refractory material.

8. The method of any of claims 1 to 7, wherein the inner layer is formed by pumping and molding the second refractory material.

9. The method of any of claims 1 to 8, wherein the blast furnace lining further comprises a bottom pad portion, the bottom pad portion including a lower pad layer of the first refractory material and an upper pad layer of the second refractory material.

10. The method of claim 9, wherein the upper pad layer comprises a plurality of layers of the second refractory material.

11. The method of claim 9 or 10, wherein the lower pad layer is formed by pumping and molding the first refractory material.

12. The method of any of claims 9 to 11, wherein the upper pad layer is formed by pumping and molding the second refractory material.

13. The method of any of claims 1 to 13, wherein the outer layer is formed to a thickness of 150 mm to 300 mm, preferably 200 mm to 250 mm.

14. The method of any of claims 1 to 13, wherein the inner layer is formed to a thickness of 700 mm to 1.1 meter, preferably 800 mm to 1.0 meter.

15. The method of any of claims 1 to 14, wherein the blast furnace lining is a jointless blast furnace lining.
